# EUROPÄISCHE PATENTSCHRIFT

(11) **EP 2 612 047 B1**
(45) Veröffentlichungstag und Bekanntmachung des Hinweises auf die Patenterteilung: **11.03.2015**
(21) Anmeldenummer: 11721035.1
(22) Anmeldetag: 23.05.2011
(51) Int. Cl.: F16C 33/10, F16C 9/04

(54) **STRUKTURIERTE SCHMUTZDEPOTS IN GLEITLAGEROBERFLÄCHEN**
STRUCTURED DIRT DEPOSITORY IN SLIDING BEARING SURFACES
DÉPÔTS DE POUSSIÈRE STRUCTURÉS DANS DES SURFACES DE PALIER LISSE

(30) Priorität: 02.09.2010 DE 102010040158
(43) Veröffentlichungstag der Anmeldung: 10.07.2013
(73) Patentinhaber: Federal-Mogul Wiesbaden GmbH, 65201 Wiesbaden (DE)
(72) Erfinder: AUBELE, Thomas, 55278 Undenheim (DE); RITTMANN, Stefan, 67292 Kirchheimbolanden (DE)
(74) Vertreter: Hoffmann Eitle
(86) Internationale Anmeldenummer: PCT/EP2011/058336
(87) Internationale Veröffentlichungsnummer: WO 2012/028345

(56) Entgegenhaltungen:
- DE-A1- 2 711 983
- DE-A1- 2 946 921
- DE-A1- 10 156 344
- DE-A1- 19 953 576
- DE-C- 339 649
- FR-A- 738 343
- JP-A- 2010 116 953

## Beschreibung

### TECHNISCHES GEBIET

Die Erfindung betrifft Gleitlager mit zumindest einer an der Gleitfläche ausgebildeten Nut, die sich zumindest teilweise in Axialrichtung einer gelagerten Welle erstreckt und an zumindest einem Ende vor dem Rand des Lagers endet.

### STAND DER TECHNIK

Gleitflächen von Gleitlagern werden aus verschiedenen Gründen profiliert. Beispielsweise wurde in der DE 39 05 450 C2 vorgeschlagen, Gleitlager mit Nuten zu versehen, die mit weicherem Material gefüllt sind, sodass sich das härtere Material mit dem weicheren Material in der Gleitschicht abwechselt, um eine bessere Verschleißfestigkeit und Ermüdungsfestigkeit zu erzielen.

Die GB 1,128,370 A beschreibt ein schmiermittelfreies Lager, in dem in der Gleitfläche Aussparungen in der Form von Nuten oder Taschen ausgebildet sind, um Schmutzpartikel aus dem Lager herauszubefördern. Fremdkörper, die in das Lager eindringen, werden in den Aussparungen gesammelt und in der Richtung der Drehung der Welle entlang der Flanken der Aussparungen transportiert und an den Enden des Lagers aus dem Lager herausbefördert.

Die DE 101 56 344 A1 beschreibt ein Lagerelement, das auf der Gleitfläche eine Ölnut aufweist, die sich in Umfangsrichtung erstreckt. Mehrere schmale Nuten sind auf der Gleitfläche mit einem bestimmten Winkel bezüglich der Drehrichtung der Welle von der Ölnut zu einer axialen Endseite der Gleitfläche ausgebildet, um Schmieröl von der Ölnut bei der Umlaufbewegung der Welle von innen zur axialen Endseite zu führen.

Gleitlager in Verbrennungsmotoren sind einer ständigen Weiterentwicklung unterworfen. In den Verbrennungsmotoren und somit auch in den Gleitlagern treten immer höhere Belastungen auf. Gleichzeitig wird die Baugröße der Motoren verringert. Zudem werden immer dünnflüssigere Öle zur Reibungsreduzierung eingesetzt. Dies führt zu immer geringeren Schmierfilmdicken, welche den Kontakt zwischen Lager und Welle verhindern. Durch geringere Schmierfilmdicken werden zunehmend auch sehr kleine Fremdpartikel von der Welle in das Lager gedrückt, die bisher seitlich ausgespült worden sind.

Ferner ändert sich der Aufbau der Lagerschale. Blei, das sehr gute Gleiteigenschaften aufweist, wird durch andere Elemente ersetzt. Auch die Belastungsfähigkeit der Lager wird erhöht, was zu einer höheren Empfindlichkeit gegenüber Fremdeinflüssen führt. Höher belastbare Schichten sind in der Regel dünner und härter als herkömmliche, was eine geringere Einbettfähigkeit, d. h. die Fähigkeit, harte Partikel zur Verschleißminderung in der Gleitschicht einzubetten, mit sich bringt. Durch die Substitution bleihaltiger Schichten verringert sich auch die Restgleitfähigkeit einer geschädigten Schicht. Auch das Substrat bleifreier Werkstoffe ist in der Regel härter als herkömmliche Bleibronzen. Dies reduziert zudem die Einbettfähigkeit mit folglich reduzierter Betriebssicherheit der Lagerstelle. Im Falle eines Partikeleintrags wird somit die Lagerstelle stärker als bisher geschädigt, was bis zum Totalausfall des Tribosystems führen kann. Fremdpartikel können unterschiedlichen Ursprungs sein und auf unterschiedliche Weise in den Ölkreislauf gelangen. Beispielsweise können die Partikel aus Urschmutz, resultierend aus der Komponentenherstellung, stammen, bei Wartungsarbeiten (Ölwechsel) in den Ölkreislauf gelangen oder aus Verbrennungsrückständen bestehen.

Verschmutzungen, insbesondere kleine Partikel, werden im hoch belasteten Bereich des Lagers über einen großen Winkel durch die Gleitfläche gezogen, bevor sie im Lagermetall eingebettet werden. Dies führt in der Regel zu starker Riefenbildung und zur Schädigung bis weit in belastete Zonen, was wiederum zu einem Lagerversagen führen kann.

Im Extremfall versucht der Fremdkörper das Lager im Bereich des geringsten Widerstands zu verlassen, d.h. im Bereich der Freilegung (größte Spaltweite), und wird infolge der Keilwirkung zwischen Welle und Freilegung von der Welle bis tief in belastete Bereiche des Lagers mitgerissen.

### ZUSAMMENFASSUNG DER ERFINDUNG

Den obigen Problemen entgegenzuwirken, ist Hintergrund der Erfindung, und eine Aufgabe der Erfindung besteht darin, die Empfindlichkeit eines Lagers hinsichtlich der Einflüsse von Fremdpartikeln zu verringern.

Die Aufgabe wird mit einem Gleitlager nach Anspruch 1 und einem Verfahren zur Herstellung eines Gleitlagers nach Anspruch 17 gelöst.

Das erfindungsgemäße Gleitlager weist zumindest eine an der Gleitfläche ausgebildete Nut auf, die sich zumindest teilweise, und vorzugsweise überwiegend, in Axialrichtung einer gelagerten Welle erstreckt. Die eine oder mehreren Nuten sind kanalförmige oder rillenförmige Ausnehmungen zur Einbettung kritischer Schmutzpartikel. Die eine oder mehreren Nuten enden in axialer Richtung an zumindest einem, vorzugsweise beiden Enden vor dem Rand des Lagers. Indem die Nuten nicht bis an den Rand treten, werden die Schmutzpartikel in den Nuten eingebettet bzw. aus dem Lager ausgespült. Gleichzeitig wird ein rasches seitliches Abführen des Schmierfilms aufgrund der Nuten vermieden. Die Nuten sind tiefer als 50 µm und/oder breiter als 100 µm, und sind somit als Nuten zur Einbettung von Teilchen bzw. Schmutzpartikeln geeignet. Bei den eingebrachten Nuten schädigen die Partikel allenfalls die Fläche bis zur nächstgelegenen Nut und werden dann darin eingebettet. Dadurch wird die geschädigte Fläche reduziert und die Ausfallwahrscheinlichkeit des Lagers drastisch gesenkt. Im Fall von geschmierten Gleitlagern hilft der sich in den Nuten befindliche Schmierstoff bei hohen Mischreibungsanteilen (Körperkontaktreibung > Flüssigkeitsreibung) Temperaturen aus kritischen Zonen abzuführen und reduziert die Reibungszahl durch seine Schmierwirkung. Dieser Effekt kann einen Ausfall des Lagers durch thermisches Fressen reduzieren.

Die bevorzugte Lage der Nuten außerhalb des hoch belasteten Bereichs des Lager bzw. der Lagerschale und die Dimensionierung der Nuten begründet die Eignung für kleine und sehr kleine Fremdpartikel. Um das Lager auch hinsichtlich der Einflüsse von größeren Fremdpartikeln widerstandsfähiger zu machen, werden die obigen Nuten mit Depots auf der Gleitfläche und/oder in einer Ölversorgungsnut des Lagers kombiniert. Genauer gesagt befinden sich ein oder mehrere Depots auf der Gleitfläche und/oder auf einer Oberfläche der Ölversorgungsnut, die gemeinsam als Depotfläche bezeichnet werden. Das Depot ist eine Aussparung, die zur Depotfläche offen ist. Das Depot erstreckt sich in das Lager, das heißt im Falle eines Depots der Gleitfläche in axialer Richtung zum Lagerrücken. Das Depot wird von einer oder mehreren Depotwänden begrenzt und bildet als taschenförmige Aussparung ein Sackloch. Die Vorzugsrichtung des Depotwinkels in Richtung zum Lagerrücken ist von der Wellendrehrichtung abhängig und zwar so, dass gesammelte Fremdkörper nicht aus dem Depot herausgespült werden können. Genauer gesagt bildet die Depotwand in der Erstreckungsrichtung mit einer Bezugsrichtung einen spitzen Winkel, wobei die Bezugsrichtung parallel zur Tangente der Depotfläche am Schnittpunkt der Depotwand mit der Depotfläche genommen wird. Hierbei wird der Winkel genommen, der aus der Depotwand in der Erstreckungsrichtung und der Tangente in Richtung vom Depot weg gebildet wird. Mit anderen Worten ist zumindest eine Depotwand schräg in das Lager eingebracht und zwar so, dass bei Drehung der Welle im Lager ein in dem Depot befindlicher Fremdkörper nicht aus dem Depot herausgespült werden kann, sondern sich vielmehr darin verkeilt. Auf diese Weise werden die gefährlichen Fremdkörper in dem einen oder in den mehreren Depots fixiert, wodurch eine Beschädigung der Funktionsfläche des Lagers vermieden oder zumindest vermindert wird. Die Funktion des Lagersystems bleibt somit auch im Extremfall erhalten. Depots können auch bei Hauptlagern in der Ölversorgungsnut eines Lagers oder einer Lagerschale integriert werden, um zu verhindern, dass Fremdkörper durch den Ölstrom in die Gleitflächen des Lagers gespült werden. In diesem Fall ist die oben genauer definierte Einbringrichtung des Depots so, dass der gerichtete Ölfluss Fremdteilchen aus dem Depot nicht herausspülen kann.

Das Depot zur Fixierung der Fremdkörper ist ein Sackloch. In diesem Fall durchstößt das Depot den Lagerrücken nicht, was je nach Herstellungsverfahren oder Einsatzgebiet des Lagers sinnvoll sein kann. Ferner ist ein Depot dieser Art auf einfache Weise herstellbar.

Vorzugsweise sind die eine oder die mehreren Nuten bis zu 80 µm tief, um eine Einbettung von Partikeln ohne übermäßige Minderung der Integrität der Gleitfläche zu ermöglichen.

Aus demselben Grund sind die eine oder die mehreren Nuten bis zu 150 µm breit. Selbstverständlich können im Fall mehrerer Nuten unterschiedliche Abmessungen vorgesehen sein, um beispielsweise verschiedenen Arten von Verschmutzungen Rechnung zu tragen. Ferner kann auch eine einzige Nut hinsichtlich ihrer Breite und/oder Tiefe entlang ihrer Erstreckung variieren.

Vorzugsweise ist die eine oder sind die mehreren Nuten schräg zur Axialrichtung einer gelagerten Welle vorgesehen, wobei der Abstand, die Anzahl sowie Winkel der Nuten variieren können. Die Anordnung der Nuten ist vorzugsweise quer oder diagonal zur Wellenlaufrichtung, um den hydrodynamischen Einfluss der Nuten zu mindern.

Aus dem gleichen Grund sind zumindest zwei Nuten in der Axialrichtung nebeneinander mit unterschiedlich ausgerichteter Schrägstellung ausgebildet. Die Nuten können sich auch kreuzen.

Vorzugsweise sind in einem bestimmten Bereich der Gleitfläche mehrere Nuten, insbesondere in Gruppen, mit unterschiedlich ausgerichteter Schrägstellung ausgebildet. Die Gruppierung kann beispielweise im Hinblick auf die Belastungsverteilung auf der Gleitfläche erfolgen.

Vorzugsweise ist das Gleitlager ein Pleuellager, bei dem eine hohe Ausfallsicherheit zu gewährleisten ist.

Das Einbringen der Nuten kann durch Lasern, Prägen, Fräsen, Stoßen, ECM, Laserschneiden, Schleifen oder Rollieren erfolgen. Auf diese Weise wird die Gleitgleitfläche mit nur geringem Mehraufwand profiliert.

Zur Vereinfachung der Herstellung wird die Nut vorzugsweise im Rahmen eines abschließenden Bearbeitungsschrittes oder vor weiteren Beschichtungsprozessen ausgebildet.

Vorzugsweise wird die Nut unmittelbar in einer Gleitschicht der Gleitfläche ausgebildet, um die durch Riefenbildung geschädigte Fläche im Belastungsbereich des Lagers zu verringern. Die Strukturierung bei Dreistofflagern kann im letzten Arbeitsschritt oder vor weiteren Beschichtungsprozessen in den Substratwerkstoff (beispielsweise Bronze) eingebracht werden. Bei Zweistofflagern (beispielsweise aus Aluminium) werden die Nuten direkt in die Gleitschicht eingebracht.

Vorzugsweise werden nach der Ausbildung der Nut jegliche Aufwürfe und/oder Grate und/oder Stege in der Umgebung der Nut entfernt, um die Güte der Gleitfläche zu verbessern.

Vorzugsweise befindet sich die eine oder befinden sich die mehreren Nuten außerhalb des hoch belasteten Bereichs. Das heißt, dass insbesondere die Freilegungsbereiche frei von Nuten der obigen Art sind. Unter einem Freilegungsbereich versteht man einen Bereich an den Lagerenden einer Lagerschale, welche das Lager bilden, in dem die Wandstärke der Lagerschale im Vergleich zur Wandstärke der restlichen Lagerschale reduziert ist. Auf diese Weise kann der Verschleiß einer in der Lagerschale laufenden Welle aufgrund von Ungenauigkeiten an den Verbindungsstellen der beiden Lagerschalen verringert werden.

Vorzugsweise ist die eine oder sind mehrere Nuten so eingearbeitet, dass sie sowohl in hoch als auch in niedrig belasteten Bereichen der Lagerschale verläuft bzw. verlaufen. Der niedrig belastete Bereich kann ein Freilegungsbereich sein oder die niedriger belastete Deckelschale der Lagerschale umfassen. Dadurch wird der Schmutz aus dem höher belasteten Bereich in einen niedriger belasteten Bereich geschleust, wo dieser dann eingebettet wird. Dadurch kann der Schmutz keine weiteren Komponenten im Ölkreislauf zerstören. Insbesondere ist dazu die Nut in Drehrichtung eingearbeitet.

Vorzugsweise weist das Gleitlager einen Freilegungsbereich auf und ist das Depot im Bereich oder nahe des Freilegungsbereichs vorgesehen. Im Prinzip soll erreicht werden, dass das oder die Depot(s) möglichst nicht in der Hauptbelastungszone des Lagers vorgesehen sind, um die gefährlichen Fremdkörper in Depots im unbelasteten Bereich des Lagers zu fixieren. Ferner ist nahe des Freilegungsbereichs bzw. der Freilegungsbereiche der Austritt des Fremdkörpers aus der Ölaustrittsbohrung zu erwarten. Da die Depots vorzugsweise für größere Partikel vorgesehen sind, verschlechtert eine Anordnung der Depots in niedrig belasteten Bereichen des Lagers das Einlagerungsverhalten der Partikel in die Depots nicht.

Aus dem gleichen Grund ist das Depot vorzugsweise am Randbereich des Lagers, in axialer Richtung gesehen, vorgesehen, das heißt in der Nähe der Wellen eintretenden bzw. der Wellen austretenden Seite. Dies soll verhindern, dass die Fremdartikel in die stark belasteten Bereiche des Lagers gelangen.

Das Fassungsvermögen der Depots entspricht vorzugsweise dem mehrfachen Volumen auftretender Fremdkörper im Motor, das heißt Partikel mit einer Abmessung von maximal etwa 3 mm x 2 mm x 1 mm oder 2 mm x 2 mm x 2 mm oder einem Durchmesser von bis zu 2 mm Durchmesser usw.

Vorzugsweise wird hinsichtlich eines minimalen Herstellungsaufwands das Depot mittels Prägen, Bohren oder Stanzen eingebracht.

Vorzugsweise ist der Querschnitt des Depots senkrecht zur Erstreckungsrichtung des Depots zylindrisch, oval oder rechteckig, um eine lokale taschenförmige Aussparung einfach herzustellen.

Vorzugsweise ist in das Depot ein Füllmittel eingebracht, das weicher als das Material des Lagers ist. In diesem Fall werden die Fremdkörper gegen Herausspülen besser fixiert. Zudem wird der hydrodynamische Schmierfilmaufbau durch Kanten nicht gestört, wenn das Filmmaterial mit der Depotfläche abschließt.

Vorzugsweise umfasst das weichere Material Elastomere, Metalle, Legierungen und/oder einen Metallschaum.

Vorzugsweise sind mehrere Depots vorhanden, die mit den oben beschriebenen Eigenschaften ausgestattet sein können. Hierbei müssen nicht alle Depots die gleiche Ausgestaltung, Position, Größe usw. aufweisen, sondern können unterschiedlich sein und unterschiedliche Aufgaben bzw. Teilaufgaben erfüllen.

Vorzugsweise ist genau ein Depot in einer Lagerschale vorgesehen, um eine Übermäßige Schädigung der Lauffläche zu vermeiden. Das Lager weist in diesem Fall genau zwei Depots auf.

Das erfindungsgemäße Gleitlager kann vorzugsweise zumindest eine an der Gleitfläche ausgebildete Schmutzleitnut aufweisen, die sich zumindest teilweise stärker in Umfangsrichtung der Lagerschale als in Axialrichtung einer darin gelagerten Welle erstreckt. Auch wenn im Folgenden von einer Schmutzleitnut die Rede ist, können mehrere Schmutzleitnuten vorgesehen sein. Die Neigung der Schmutzleitnut mit einer bevorzugten Erstreckung in Umfangsrichtung bewirkt einen effektiven Transport von Fremdpartikeln aufgrund der Ölflussrichtung und der Drehung einer in der Lagerschale gelagerten Welle. Aus diesem Grund ist die eine oder sind mehrere Schmutzleitnuten vorzugsweise in Drehrichtung eingearbeitet. Um den Schmutz effektiv aus dem Lager zu spülen und eine Beschädigung des Lagers aufgrund von Fremdpartikeln zu vermeiden, erstreckt sich die Schmutzleitnut bis zu einem Rand des Lagers, d.h. bis zu einem der beiden Ränder in Axialrichtung einer im Lager gelagerten Welle, und ist am Rande offen. Die Schmutzpartikel, die von der Schmutzleitnut zum Rand transportiert werden, können somit nach Außen abgegeben werden. Der so abgeführte Schmutz gelangt in den Ölsumpf und wird beim nächsten Umpumpzyklus beispielsweise durch einen Filter aus dem Ölstrom gefiltert. Die Schmutzleitnuten können durch Einprägung, Einstanzung, Eindrehung usw. in die Gleitfläche des geschmierten Gleitlagers eingebracht werden. Ferner können die Schmutzleitnuten hinsichtlich ihrer Länge, Breite, Tiefe, Geometrie und Lage variieren, wodurch eine Anpassung an eine Verteilung der Form und Größe von auftretenden Schmutzpartikeln vorgenommen werden kann. Bei den eingebrachten Schmutzleitnuten schädigen die Partikel allenfalls die Fläche bis zur nächstgelegenen Schmutzleitnut und werden dann von der Schmutzleitnut nach Außen abtransportiert. Dadurch wird die geschädigte Fläche reduziert und die Ausfallwahrscheinlichkeit des Lagers drastisch gesenkt. Ferner hilft der sich in der Schmutzleitnut befindliche Schmierstoff bei hohen Mischreibungsanteilen (Körperkontaktreibung > Flüssigkeitsreibung) Temperaturen aus kritischen Zonen abzuführen und reduziert die Reibungszahl durch seine Schmierwirkung. Dieser Effekt kann einen Ausfall des Lagers durch thermisches Fressen reduzieren.

Vorzugsweise ist die Schmutzleitnut bis zu 80 µm tief, um eine Aufnahme und einen Abtransport von Partikeln ohne übermäßige Minderung der Integrität der Gleitfläche zu ermöglichen. Aus demselben Grund ist die Schmutzleitnut vorzugsweise bis zu 150 µm breit. Selbstverständlich können mehrere Schmutzleitnuten diese oder andere Eigenschaften bevorzugter Ausgestaltungen aufweisen. Insbesondere könne im Fall mehrerer Schmutzleitnuten unterschiedliche Abmessungen vorgesehen sein, um verschiedenen Verschmutzungsarten Rechnung zu tragen. Ferner kann eine Schmutzleitnut hinsichtlich ihrer Breite und/oder Tiefe und/oder ihres Querschnitts entlang ihrer Erstreckung variieren.

Vorzugsweise sind zumindest zwei Schmutzleitnuten in Axialrichtung nebeneinander mit unterschiedlich ausgerichteter Schrägstellung ausgebildet. Hierbei können der Abstand, die Anzahl sowie der Winkel der Schmutzleitnuten variieren. Durch die schräge Anordnung der Schmutzleitnuten zur Wellenlaufrichtung wird der hydrodynamische Einfluss der Schmutzleitnuten gemindert. Aus diesem Grund und um eine einseitige Belastung zu vermeiden, ist eine symmetrische Anordnung der Nuten im Falle mehrere Schmutzleitnuten bevorzugt. Als Symmetrieachse kommt hierbei insbesondere die Achse in Frage, die keine axiale Komponente aufweist und in der Mitte der Gleitfläche verläuft.

Vorzugsweise ist eine Mittelnut vorgesehen, die sich dadurch auszeichnet, dass sie keine axiale Komponente aufweist. Die Mittelnut kann umlaufend oder beidseitig geschlossen sein. Die Mittelnut kommuniziert ferner mit zumindest einer der Schmutzleitnuten. Durch die Mittelnut wird der Transport von Schmutzpartikeln in der Umlaufrichtung bewirkt, um die Schmutzpartikel zu einer Schmutzleitnut zu transportieren, die anschließend den Abtransport der Partikel vornimmt. Hierbei ist es bevorzugt, dass die Mittelnut die Fremdpartikel zunächst aus einem hoch belasteten Bereich des Lagers in weniger belastete Bereiche transportiert, beispielsweise in Freilegungsbereiche, die vorzugsweise vorgesehen sind, bevor die Schmutzpartikel nach außen abgegeben werden. Unter einem Freilegungsbereich versteht man einen Bereich an den Lagerenden einer Lagerschale, welche das Lager bilden, in dem die Wandstärke der Lagerschale im Vergleich zur Wandstärke der restlichen Lagerschale reduziert ist. Auf diese Weise kann der Verschleiß einer in der Lagerschale laufenden Welle aufgrund von Ungenauigkeiten an den Verbindungsstellen der beiden Lagerschalen verringert werden. Es können mehrere Mittelnuten vorgesehen sein. Vorzugsweise verläuft die Mittelnut in der Mitte der Gleitfläche, d.h. auf der oben definierten Symmetrieachse.

Vorzugsweise sind zwei Schmutzleitnuten V-förmig angeordnet. Die beiden Schmutzleitnuten erstrecken sich von einem gemeinsamen Ausgangspunkt im in axialer Richtung mittleren Bereich des Lagers in jeweils entgegengesetzter, axialer Richtung nach außen. Die Schrägstellung ist vorzugsweise symmetrisch.

Vorzugsweise sind zwei Paar von je zwei V-förmig angeordneten Schmutzleitnuten vorgesehen, die sich, wie es oben beschrieben ist, von einem gemeinsamen Ausgangspunkt im in axialer Richtung mittleren Bereich des Lagers in jeweils entgegengesetzter axialer Richtung nach außen erstrecken, wobei die beiden Ausgangspunkte mit einer Mittelnut verbunden sind. Eine solche Anordnung ist beispielsweise für ein geschmiertes Gleitlager ohne definierte Drehrichtung geeignet, wenn die beiden Vs in Umlaufrichtung entgegengesetzt ausgebildet sind.

Vorzugsweise befinden sich die V-förmig angeordneten Schmutzleitnuten in niedrig belasteten Bereichen des Lagers, d. h. insbesondere in den Freilegungsbereichen, sofern vorhanden.

Vorzugsweise ist zumindest eine Schmutzleitnut gekrümmt, um den Einfluss der Nut auf die hydrodynamischen Eigenschaften des Lagers zu minimieren.

Vorzugsweise kreuzen sich zumindest zwei Schmutzleitnuten, wodurch ein Austausch von Schmutzpartikeln zwischen den Schmutzleitnuten erfolgen kann.

Vorzugsweise sind 10 bis 20 Schmutzleitnuten vorhanden, wodurch ein effektiverer Schmutzabtransport erzielt wird.

Vorzugsweise sind in einem bestimmten Bereich der Gleitfläche mehrere Schmutzleitnuten, insbesondere in Gruppen, mit unterschiedlich ausgerichteter Schrägstellung ausgebildet. Die Gruppierung kann beispielsweise im Hinblick auf die Belastungsverteilung auf der Gleitfläche oder den hydrodynamischen Einfluss der Nuten auf das Gleitlager erfolgen.

Das Einbringen der Schmutzleitnut kann durch Lasern, Prägen oder Rollieren erfolgen. Auf diese Weise wird die Gleitfläche mit nur geringem Mehraufwand profiliert. Zur Vereinfachung der Herstellung wird die Schmutzleitnut vorzugsweise im Rahmen eines abschließenden Bearbeitungsschrittes oder vor weiteren Beschichtungsprozessen ausgebildet.

Vorzugsweise wird die Schmutzleitnut unmittelbar in einer Gleitschicht der Gleitfläche ausgebildet, um die durch Riefenbildung geschädigte Fläche im Belastungsbereich des Lagers zu verringern. Die Strukturierung bei Dreistofflagern kann im letzten Arbeitsschritt oder vor weiteren Beschichtungsprozessen in den Substratwerkstoff (beispielsweise Bronze) eingebracht werden. Bei Zweistofflagern (beispielsweise Aluminium) wird die Schmutzleitnut vorzugsweise direkt in die Gleitschicht eingebracht.

Vorzugsweise werden nach der Ausbildung der Schmutzleitnut jegliche Aufwürfe und/oder Grate und/oder Stege in der Umgebung der Schmutzleitnut entfernt, um die Güte der Gleitfläche zu verbessern.

Das erfindungsgemäße Verfahren zum Einbringen der Nuten kann mit ein oder mehreren Schritten zum Einbringen einer oder mehrerer obiger Depots und/oder obiger Schmutzleitnuten und/oder Mittelnuten in das Gleitlager oder in eine Lagerschale ergänzt werden.

### KURZE BESCHREIBUNG DER ZEICHNUNGEN

Fig. 1A bis 1G zeigen verschiedene Anordnungen von Nuten auf der Gleitfläche einer Lagerschale, wobei die Gleitfläche abgewickelt und in einer Draufsicht dargestellt ist.
Fig. 2 zeigt eine Querschicht eines aus zwei Lagerschalen gebildeten Lagers mit darin eingebrachter Welle, wobei das Lager zwei Depots aufweist;
Fig. 3 zeigt einen Querschnitt gemäß der Fig. 2 mit kreiszylindrischem Depotquerschnitt;
Fig. 4 ist eine Ansicht gemäß der Fig. 2 mit ovalem Depotquerschnitt;
Fig. 5 ist eine Ansicht gemäß der Fig. 2 mit rechteckförmigem Depotquerschnitt;
Fig. 6 ist eine Ansicht gemäß der Fig. 2 mit Depottaschen;
Fig. 7 ist eine Ansicht gemäß der Fig. 2 mit Depottaschen, in die ein Füllmittel eingebracht ist;
Fig. 8 ist eine Ansicht gemäß der Fig. 2 mit durchgehenden Depots, wobei in ein Depot ein Füllmittel eingebracht ist.
Fig. 9A bis 9F sind jeweils Draufsichten abgewickelter Gleitflächen von geschmierten Gleitlagern mit Schmutzleitnuten.

### WEGE ZUR AUSFÜHRUNG DER ERFINDUNG

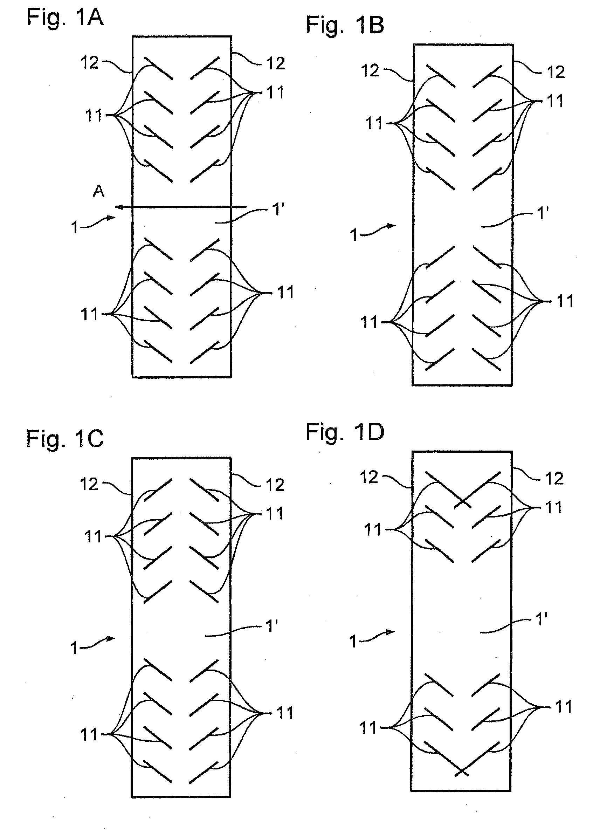

Die Fig. 1A bis 1G sind Draufsichten einer abgewickelten Gleitfläche 1' einer Lagerschale 1. In die Gleitfläche 1' sind Nuten 11 eingebracht, die jeweils eine nicht verschwindende axiale Komponente aufweisen. In der Fig. 1A ist die Axialrichtung mit einem Pfeil A eingezeichnet. Die Nuten 11 tragen zur Profilierung der Gleitfläche 1' bei. Jeweils zwei Lagerschalen 1 bilden ein Lager, wobei gleich und unterschiedlich mit Nuten 11 profilierte Lagerschalen 1 zur Herstellung eines Lagers kombiniert werden können.

In den Figuren sind mehrere Nuten 11 jeweils zu Nutengruppen zusammengefasst.

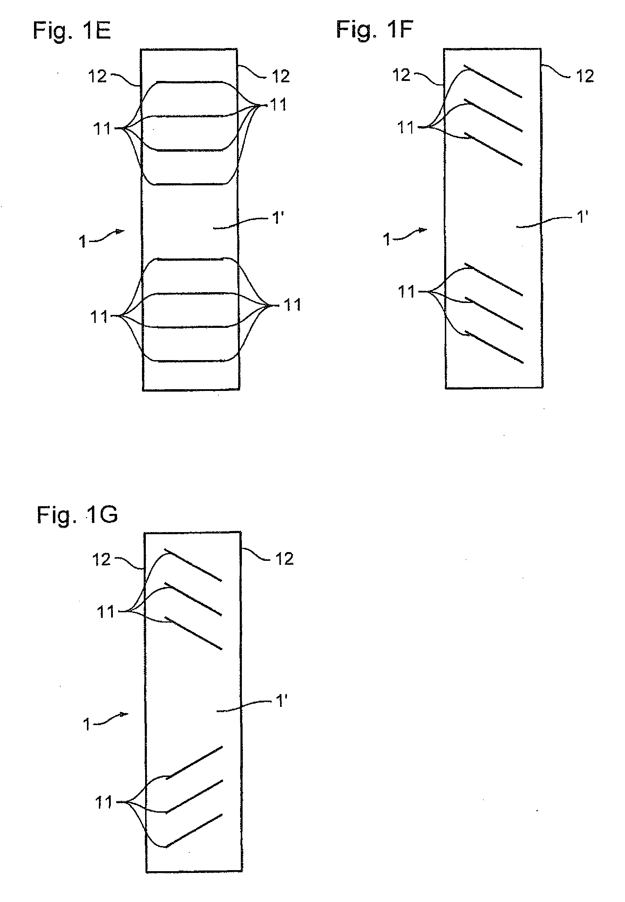

Die Nuten 11 können, wie es in den Beispielen der Fig. 1E, 1F und 1G gezeigt ist, den mittleren Bereich der Lagerschale 1 überqueren, oder, wie es in den Fig. 1A, 1B und 1C gezeigt ist, in den axialen Randbereichen gruppiert sein, sodass der mittlere Bereich der Lagerschale 1 unprofiliert bleibt.

Die Nuten 11 enden jeweils vor dem seitlichen Rand 12 der Lagerschale 1, um ein Einbetten der Partikel zu ermöglichen und um ein rasches seitliches Abführen des Schmierfilms zu vermeiden.

Die Nuten 11 können quer vorgesehen sein, wie es im Beispiel der Fig. 1E dargestellt ist. Bei vorgegebener Laufrichtung der Drehwelle kann es sinnvoll sein, die Anordnung der Nuten 11 im Hinblick auf die Laufrichtung zu optimieren. Diesbezüglich zeigen die Fig. 1A, 1B, 1C, 1D, 1F und 1G schräg zur Laufrichtung eingebrachte Nuten 11. Insbesondere können der Abstand, die Anzahl, sowie der Winkel der Nuten 11, wie es in den Fig. 1A bis 1G gezeigt ist, variieren, um hydrodynamische Effekte aus einem Zusammenwirken der Nuten 11 mit dem Schmierfilm zu verringern. Sich kreuzende Nuten 11 sind in der Fig. 1D gezeigt.

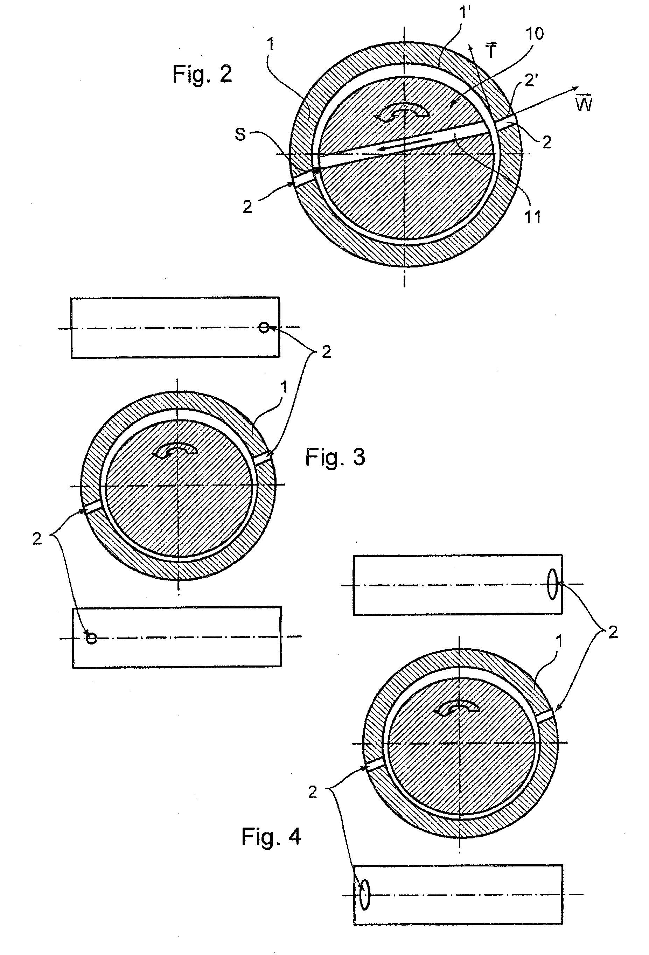

Fig. 2 ist ein Querschnitt eines aus zwei Lagerschalen 1 gebildeten Lagers. In das Lager ist eine Welle 10 eingebracht, die einen Ölkanal mit einer Ölaustrittsbohrung 11 aufweist. Die Drehrichtung der Welle 10 ist mit einem Pfeil im oberen Bereich der Welle angezeigt. Danach ergibt sich eine Hauptbelastungsrichtung, die mit einem Doppelpfeil eingezeichnet ist. Die Ölflussrichtung durch die Ölaustrittsbohrung ist ebenfalls eingezeichnet. Die Lagerschalen 1 weisen je eine Gleitfläche 1' auf. In den beiden Lagerschalen 1 sind je ein Depot 2 ausgebildet. Die Depots 2 sind von zylindrischer Gestalt und durchstoßen den Lagerrücken. Die Depots 2 sind zur Gleitfläche 1' offen.

Ein Schmutzpartikel ist mit dem Referenzzeichen S bezeichnet und befindet sich auf dem Weg in das Depot 2. Durch die Drehung der Welle wird das Teilchen in das Depot 2 gedrückt und dort fixiert. Die Einbringrichtung der Depots 2 in die Lagerschalen 1 in Richtung zum Lagerrücken ist so, dass, entsprechend der Drehrichtung, die gesammelten Fremdkörper nicht aus dem Depot 2 herausgespült werden können. Mit Bezug auf Fig. 2 bedeutet das, dass die beiden eingezeichneten Vektoren 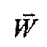 und 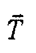 einen spitzen Winkel bilden. Der Vektor 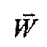 bezeichnet die Richtung der Depotwand 2' in der Erstreckungsrichtung des Depots und im Bereich des Schnittspunkts der Depotwand 2' mit der Gleitfläche 1'. Der Vektor 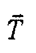 bezeichnet die Richtung entlang der Tangente der Depotfläche am Schnittpunkt der Depotwand der Depotfläche in Richtung vom Depot 2 weg.

Es sei bemerkt, dass in Fig. 2 lediglich ein möglicher Querschnitt des Systems aus Lager und Depot 2 gezeigt ist. Die obige Bedingung des Winkels der Vektoren 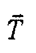 und 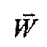 sollte zumindest für einen wesentlichen Teil der Depotwand in der axialen Richtung des Lagers erfüllt sein, sodass die Vermeidung des Herausspülens von Fremdpartikeln gewährleistet ist.

Die beiden Depots 2 sind in Fig. 2 im Bereich der Lagerschalenenden vorgesehen, in dem Freilegungsbereiche vorgesehen sein können, die in den Figuren aber nicht dargestellt sind. Ferner befinden sich die Depots im Bereich der Ölaustrittsbohrung 13 der Welle 10 (in axialer Richtung).

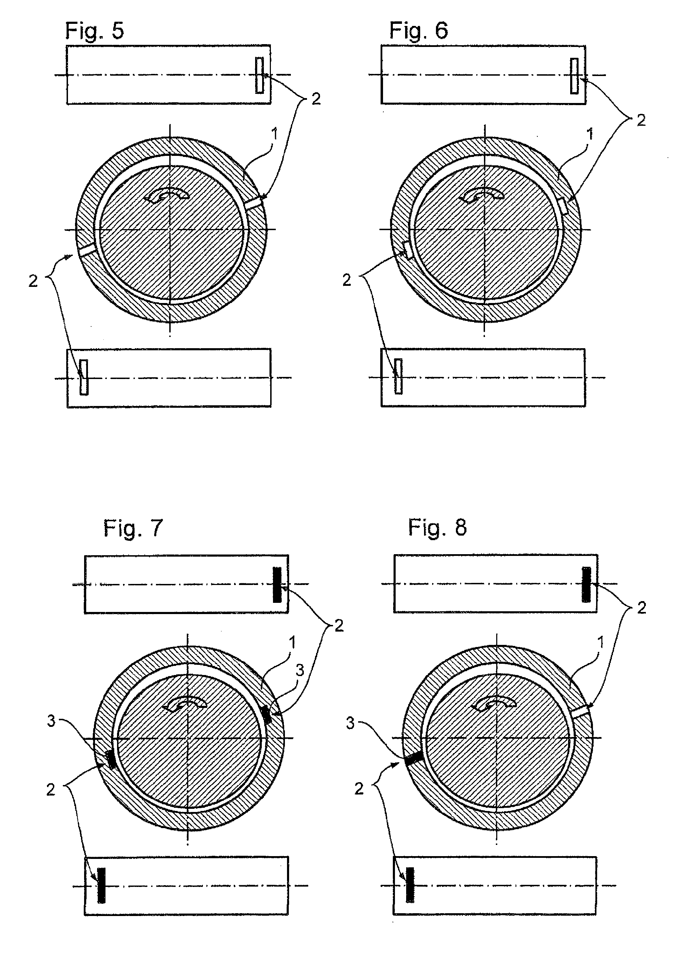

Die Figuren 3, 4 und 5 zeigen jeweils eine Ansicht gemäß der Fig. 2, wobei oberhalb und unterhalb des Lagers ein aufgerollter Querschnitt des Lagers dargestellt ist. Darin sind beispielhafte Querschnittsformen der Depots 2 in Richtung der Einbringrichtung der Depots 2 zu erkennen. In Fig. 3 ist ein kreisförmiger Querschnitt, in Fig. 4 ein ovaler Querschnitt und in Fig. 5 ein rechteckförmiger Querschnitt gezeigt. Es sei bemerkt, dass, wenn mehrere Depots 2 vorgesehen sind, die Depots 2 keinen einheitlichen Querschnitt aufweisen müssen. Die Depots 2 müssen ferner keine einheitlichen Querschnitte entlang der Einbringrichtung aufweisen, sondern können als unregelmäßig geformte Aussparungen, Sacklöcher, Durchgangsöffnungen usw. ausgebildet sein.

Fig. 6 ist eine Ansicht gemäß der Fig. 2, wobei die Depots 2 als taschenförmige Aussparungen ausgebildet sind, die den Lagerrücken nicht durchstoßen. Selbstverständlich können die Querschnitte unterschiedlich ausgebildet sein, wie es in den vorangegangen Ausführungsformen gezeigt ist.

Fig. 7 und Fig. 8 sind Ansichten gemäß der Fig. 2, wobei in einige der taschenförmigen Depots 2 und/oder Durchgangsöffnungen, die als Depots 2 fungieren, ein Füllmittel 3 bzw. Füllmaterial eingebracht ist. Das Füllmittel dient dazu, die Fixierung von eingefangenen Fremdpartikeln zu verbessern. Daher besteht das Füllmittel vorzugsweise aus einem weicheren Material als die Gleitfläche 1'.

Obwohl es aufgrund der Querschnittsdarstellung nicht ersichtlich ist, sind die Lagerschalen mit Depots 2 der Fig. 2 bis 8 mit einer oben beschriebenen Profilierung mit Nuten 11 ausgestattet.

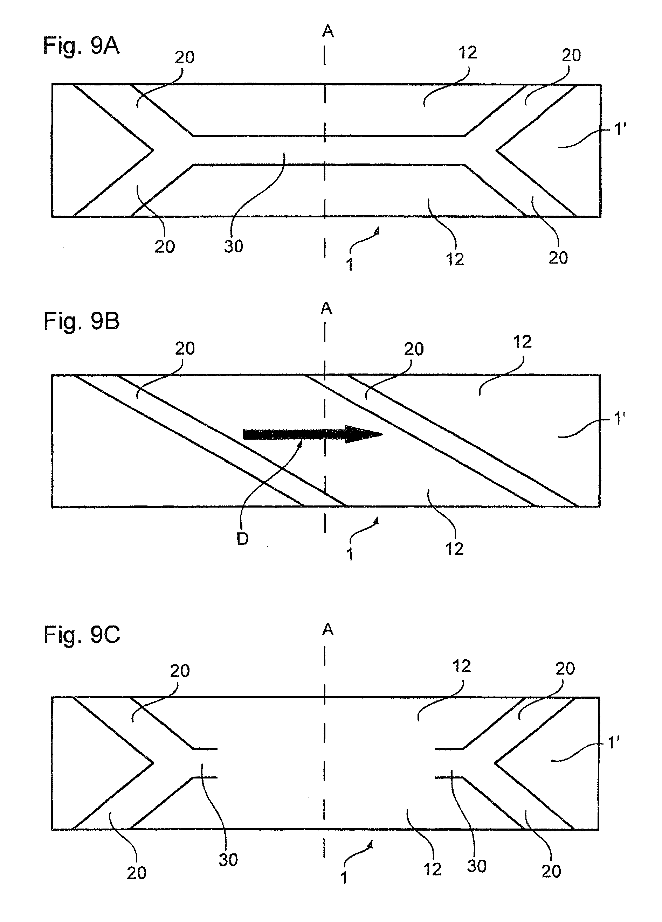

Die Figuren 9A bis 9F sind Draufsichten einer abgewickelten Gleitfläche 1' einer Lagerschale 1. In die Gleitfläche 1' sind Nuten 20 eingebracht, die als Schmutzleitnuten dienen, zum Transport von Fremdpartikeln nach außen.

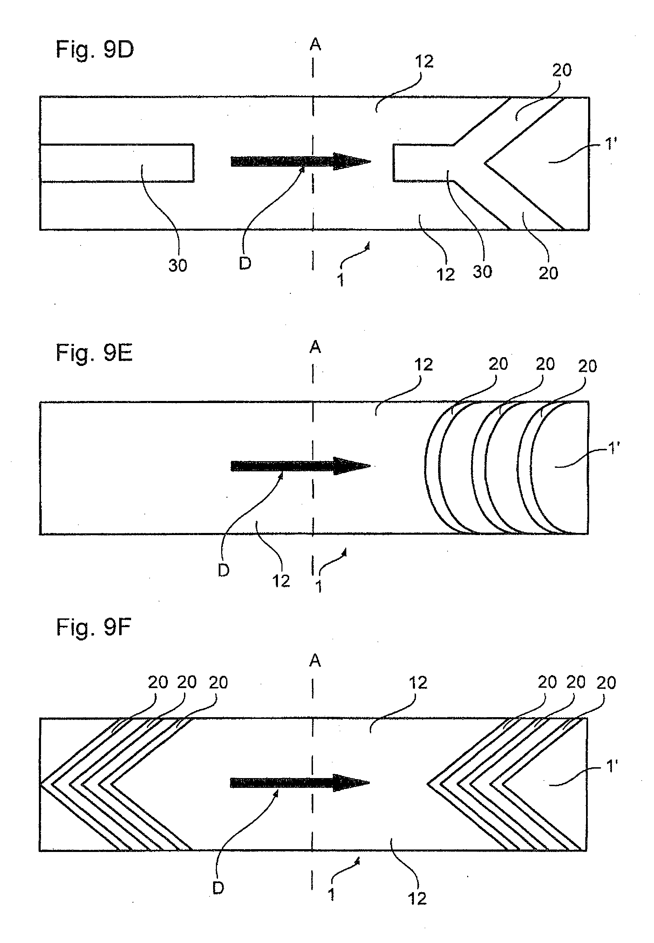

In den Figuren 9A, 9B, 9C, 9D und 9F sind die Schmutzleitnuten 20 als gerade Nuten ausgebildet und in Umfangsrichtung der Lagerschale stärker geneigt als in axialer Richtung einer sich im Lager befindlichen Welle. Die axiale Richtung ist mit einer gestrichelten Linie A eingezeichnet. In der Figur 9E sind die Schmutzleitnuten 20 gekrümmt und zumindest in den Randbereichen 12 der Lagerschale 1 in Umfangsrichtung stärker geneigt als in axialer Richtung A.

In den gezeigten Projektionen fällt die Umlaufrichtung der Lagerschale mit der in den Figuren 9B, 9D, 9E und 9F eingezeichneten Drehrichtung D zusammen. In den Beispielen dieser Figuren ist die Anordnung der Schmutzleitnuten 20 von der Drehrichtung der Welle abhängig, wohingegen die Ausführungsbeispiele der Figuren 9A und 9C für eine Lagerschale ohne definierte Drehrichtung geeignet sind.

Die Schmutzleitnuten 20 tragen zur Profilierung der Gleitfläche 1' bei. Jeweils zwei Lagerschalen 1 bilden ein Lager, wobei gleiche oder unterschiedliche mit Schmutzleitnuten 20 profilierte Lagerschalen 1 zur Herstellung eines Lagers kombiniert werden können.

Die Schmutzleitnuten 20 gehen jeweils über den seitlichen Rand 12 der Lagerschale 1 hinaus, um Schmutzpartikel, die sich zwischen der Lagerschale und der Welle befinden, nach außen abzuführen. In den Figuren 9A und 9C sind jeweils zwei Paar V-förmig angeordnete Schmutzleitnuten 20 symmetrisch zu einer Achse vorgesehen, die keine axiale Komponente aufweist und in der Mitte der Gleitfläche verläuft, d.h. sie fällt mit dem Pfeil D zusammen. In der Figur 9D ist eine V-förmige Anordnung von zwei Schmutzleitnuten 20 abgebildet.

In der Figur 9A sind die beiden Scheitelpunkte des Vs mit einer Mittelnut 30 verbunden, die sich in Umfangsrichtung der Lagerschale erstreckt, um ein rasches Zuführen von Schmutzpartikeln in die Schmutzleitnuten 20 zu gewährleisten. Ein Zuführen von Schmutzpartikeln durch eine Mittelnut 30 zum V ist auch in der Figur 9C unter Zuhilfenahme von zwei Mittelnuten 30 gezeigt. Eine weitere Anordnung mit Mittelnuten 30 ist in der Figur 9D gezeigt. In den Ausführungsbeispielen mit einer oder zwei Mittelnuten 30, sind die Mittelnuten 30 mit geschlossenen oder in Schmutzleitnuten 20 mündenden Enden ausgestattet. Die Mittelnuten 30 können allerdings auch als durchgehende Umfangsnuten ausgebildet sein. Ferner können mehrere Mittelnuten 30 an unterschiedlichen axialen Positionen vorgesehen sein.

Eine V-förmige Anordnung von Schmutzleitnuten 20, die sich von den vorgenannten V-förmig angeordneten Schmutzleitnuten 20 unterscheidet, ist in Figur 9F gezeigt, worin V-Nuten gruppiert vorgesehen sind und insgesamt zwei Gruppen mit mehreren Schmutzleitnuten 20 in die Gleitfläche 1' eingebracht sind.

## Patentansprüche

1. Gleitlager mit
zumindest einer an einer Gleitfläche (1') des Gleitlagers ausgebildeten Nut (11), die sich zumindest teilweise in Axialrichtung (A) einer gelagerten Welle erstreckt, an zumindest einem Ende vor dem Rand (12) des Lagers (l) endet und tiefer als 50 *µ*m und/oder breiter als 100 *µ*m ist, sodass Schmutz und/oder Partikel eingebettet werden können, und
ferner mindestens einem als Sackloch ausgebildeten Depot (2) auf einer Depotfläche, welche die Gleitfläche (1') und/oder eine Oberfläche einer Ölversorgungsnut ist, wobei
das Depot (2) eine Aussparung ist, die zur Depotfläche offen ist, eine Depotwand (2') aufweist und sich von der Depotfläche weg in das Lager erstreckt, und
die Depotwand (2') in der Erstreckungsrichtung mit einer Bezugsrichtung einen spitzen Winkel bildet, wobei die Bezugsrichtung die Tangente der Depotfläche am Schnittpunkt der Depotwand (2') mit der Depotfläche in Richtung vom Depot (2) weg ist.

2. Gleitlager nach Anspruch 1,
**dadurch gekennzeichnet, dass**
zumindest eine Nut (11) bis zu 80 µm tief ist.

3. Gleitlager nach Anspruch 1 oder 2,
**dadurch gekennzeichnet, dass**
zumindest eine Nut (11) bis zu 150 µm breit ist.

4. Gleitlager nach einem der vorangehenden Ansprüche,
**dadurch gekennzeichnet, dass**
zumindest eine Nut (11) schräg zur Axialrichtung (A) einer gelagerten Welle ist.

5. Gleitlager nach einem der vorangehenden Ansprüche,
**dadurch gekennzeichnet, dass**
zumindest zwei Nuten (11) in Axialrichtung nebeneinander mit unterschiedlich ausgerichteter Schrägstellung ausgebildet sind.

6. Gleitlager nach einem der vorangehenden Ansprüche,
**dadurch gekennzeichnet, dass**
an einer, in Axialrichtung betrachtet, bestimmten Stelle mehrere Nuten (11), in Gruppen, mit unterschiedlich ausgerichteter Schrägstellung ausgebildet sind.

7. Gleitlager nach einem der vorangehenden Ansprüche,
**dadurch gekennzeichnet, dass**
sich zumindest zwei Nuten (11) kreuzen.

8. Gleitlager nach einem der vorangehenden Ansprüche,
**dadurch gekennzeichnet, dass**
10 bis 20 Nuten vorhanden sind.

9. Gleitlager nach einem der vorangehenden Ansprüche,
**dadurch gekennzeichnet, dass**
das Gleitlager ein Pleuellager ist.

10. Gleitlager nach einem der Ansprüche 1 bis 9,
**dadurch gekennzeichnet, dass**
das Gleitlager einen Freilegungsbereich aufweist und das Depot (2) im Bereich des Freilegungsbereichs vorgesehen ist.

11. Gleitlager nach einem der Ansprüche 1 bis 10,
**dadurch gekennzeichnet, dass**
das Depot (2) am Randbereich des Lagers in axialer Richtung vorgesehen ist.

12. Gleitlager nach einem der Ansprüche 1 bis 11,
**dadurch gekennzeichnet, dass**
das Fassungsvermögen des Depots (2) einem mehrfachen des Volumens auftretender Fremdkörper mit einer Abmessung von maximal etwa 3 mm x 2 mm x 1 mm oder 2 mm x 2 mm x 2 mm oder einem Durchmesser von maximal etwa 2 mm entspricht.

13. Gleitlager nach einem der Ansprüche 1 bis 12,
**dadurch gekennzeichnet, dass**
in das Depot (2) ein Füllmittel (3) eingebracht ist, das weicher als das Material des Lagers ist.

14. Gleitlager nach einem der vorhergehenden Ansprüche,
**dadurch gekennzeichnet, dass**
zumindest eine an der Gleitfläche (1') ausgebildete Schmutzleitnut (20), die sich zumindest teilweise stärker in Umfangsrichtung des Gleitlagers als in Axialrichtung (A) einer darin gelagerten Welle erstreckt, sich bis zu einem Rand (12) des Lagers erstreckt und am Rand offen ist vorgesehen ist, so dass Schmutzpartikel, die von der Schmutzleitnut (20) zum Rand (12) transportiert werden, nach außen abgegeben werden können.

15. Gleitlager nach Anspruch 14,
**dadurch gekennzeichnet, dass**
zusätzlich eine Mittelnut (30) vorgesehen ist, die keine axiale Komponente aufweist und mit zumindest einer der Schmutzleitnuten (20) kommuniziert.

16. Gleitlager nach Anspruch 14 oder 15,
**dadurch gekennzeichnet, dass**
zwei Schmutzleitnuten (20) V-förmig angeordnet sind, die sich von einem gemeinsamen Ausgangspunkt im in axialer Richtung mittleren Bereich des Lagers in jeweils entgegengesetzter axialer Richtung nach außen erstrecken.

17. Gleitlager nach Anspruch 15 und 16,
**dadurch gekennzeichnet, dass**
zwei Paar von je zwei V-förmig angeordneten Schmutzleitnuten (20) vorgesehen sind, die sich von einem gemeinsamen Ausgangspunkt im in axialer Richtung mittleren Bereich des Lagers in jeweils entgegengesetzter axialer Richtung nach außen erstrecken, wobei die beiden Ausgangspunkte mit der Mittelnut (30) verbunden sind.

18. Verfahren zur Herstellung eines Gleitlagers nach Anspruch 1, bei dem die zumindest eine Nut (11) an der Gleitfläche (1') des Gleitlagers ausgebildet wird, die sich zumindest teilweise in Axialrichtung (A) einer gelagerten Welle erstreckt, an zumindest einem Ende vor dem Rand (12) des Lagers endet und mehr als 50 µm tief und/oder mehr als 100 µm breit ist, wobei
ferner ein als Sackloch auszubildendes Depot (2) in eine Depotfläche, welche die Gleitfläche (1') und/oder eine Oberfläche einer Ölversorgungsnut ist, eingebracht wird,
das Depot (2) eine Aussparung ist, die zur Depotfläche offen ist, eine Depotwand (2') aufweist und sich von der Depotfläche weg in das Lager erstreckt, eun
die Depotwand (2') in der Erstreckungsrichtung mit einer Bezugsrichtung einen spitzen Winkel bildet, wobei die Bezugsrichtung die Tangente der Depotfläche am Schnittpunkt der Depotwand (2') mit der Depotfläche in Richtung vom Depot (2) weg ist.

19. Verfahren nach Anspruch 18,
**dadurch gekennzeichnet, dass**
die Nut (11) durch Lasern, Prägen oder Rollieren ausgebildet wird.

20. Verfahren nach Anspruch 18 oder 19,
**dadurch gekennzeichnet, dass**
die Nut (11) im Rahmen eines abschließenden Bearbeitungsschrittes oder vor weiteren Beschichtungsprozessen ausgebildet wird.

21. Verfahren nach einem der Ansprüche 18 bis 20,
**dadurch gekennzeichnet, dass**
die Nut (11) unmittelbar in einer Gleitschicht der Gleitfläche ausgebildet wird.

22. Verfahren nach einem der Ansprüche 18 bis 21,
**dadurch gekennzeichnet, dass**
nach der Ausbildung der Nut (11) jegliche Aufwürfe und/oder Grate und/oder Stege in der Umgebung der Nut entfernt werden.

## Claims

1. Sliding bearing having at least one groove (11) formed on a sliding surface (1') of the sliding bearing and which extends at least partly in axial direction (A) of a mounted shaft, terminates at least at one end before the edge (12) of the bearing (1) and is deeper than 50 µm and/or wider than 100 µm so that dirt and/or particles may be embedded, and furthermore at least one depository (2) formed as a blind hole on a depository surface which is the sliding surface (1') and/or a surface of an oil-supply groove, wherein the depository (2) is a recess which is open towards the depository surface, has a depository wall (2') and extends away from the depository surface into the bearing, and the depository wall (2') in the direction of extension forms an acute angle with a reference direction, wherein the reference direction is the tangent of the depository surface at the point of intersection of the depository wall (2') with the depository surface in the direction away from the depository (2).

2. Sliding bearing according to claim 1, **characterised in that** at least one groove (11) is up to 80 µm deep.

3. Sliding bearing according to claim 1 or 2, **characterised in that** at least one groove (11) is up to 150 µm wide.

4. Sliding bearing according to one of the preceding claims, **characterised in that** at least one groove (11) is at an angle to the axial direction (A) of a mounted shaft.

5. Sliding bearing according to one of the preceding claims, **characterised in that** at least two grooves (11) are formed in axial direction next to one another with differently aligned inclination.

6. Sliding bearing according to one of the preceding claims, **characterised in that** several grooves (11), in groups, with differently aligned inclination, are formed at a certain point, viewed in axial direction.

7. Sliding bearing according to one of the preceding claims, **characterised in that** at least two grooves (11) intersect.

8. Sliding bearing according to one of the preceding claims, **characterised in that** 10 to 20 grooves are present.

9. Sliding bearing according to one of the preceding claims, **characterised in that** the sliding bearing is a connecting-rod bearing.

10. Sliding bearing according to one of claims 1 to 9, **characterised in that** the sliding bearing has an exposure region and the depository (2) is provided in the region of the exposure region.

11. Sliding bearing according to one of claims 1 to 10, **characterised in that** the depository (2) is provided at the edge region of the bearing in axial direction.

12. Sliding bearing according to one of claims 1 to 11, **characterised in that** the holding capacity of the depository (2) corresponds to a multiple of the volume of foreign bodies occurring with a dimension of maximum about 3 mm x 2 mm x 1 mm or 2 mm x 2 mm x 2 mm or a diameter of maximum about 2 mm.

13. Sliding bearing according to one of claims 1 to 12, **characterised in that** a filler (3), which is softer than the material of the bearing, is introduced into the depository (2).

14. Sliding bearing according to one of the preceding claims, **characterised in that** at least one dirt-guiding groove (20) formed on the sliding surface (1') and which extends at least partly more strongly in the peripheral direction of the sliding bearing than in the axial direction (A) of a shaft mounted therein, extends as far as an edge (12) of the bearing and is open at the edge, is provided so that dirt particles which are transported from the dirt-guiding groove (20) to the edge (12), may be released outwardly.

15. Sliding bearing according to claim 14, **characterised in that** a central groove (30) is additionally provided which does not have an axial component and communicates with at least one of the dirt-guiding grooves (20).

16. Sliding bearing according to claim 14 or 15, **characterised in that** two dirt-guiding grooves (20) are arranged to be V-shaped, which extend outwardly in each case in opposite axial direction from a common starting point in the central region of the bearing in axial direction.

17. Sliding bearing according to claim 15 and 16, **characterised in that** two pairs of in each case two dirt-guiding grooves (20) arranged in a V-shape are provided, which extend outwardly in each case in opposite axial direction from a common starting point in the central region of the bearing in axial direction, wherein the two starting points are connected to the central groove (30).

18. Method for producing a sliding bearing according to claim 1, in which the at least one groove (11) is formed on the sliding surface (1') of the sliding bearing and which extends at least partly in axial direction (A) of a mounted shaft, terminates at least at one end before the edge (12) of the bearing and is more than 50 µm deep and/or more than 100 µm wide, wherein furthermore a depository (2) formed as a blind hole is introduced into a depository surface which is the sliding surface (1') and/or a surface of an oil-supply groove, the depository (2) is a recess which is open towards the depository surface, has a depository wall (2') and extends away from the depository surface into the bearing, and the depository wall (2') in the direction of extension forms an acute angle with a reference direction, wherein the reference direction is the tangent of the depository surface at the point of intersection of the depository wall (2') with the depository surface in the direction away from the depository (2).

19. Method according to claim 18, **characterised in that** the groove (11) is formed by lasering, embossing or rolling.

20. Method according to claim 18 or 19, **characterised in that** the groove (11) is formed within the framework of a final processing step or before further coating processes.

21. Method according to one of claims 18 to 20, **characterised in that** the groove (11) is formed directly in a sliding layer of the sliding surface.

22. Method according to one of claims 18 to 21, **characterised in that** after forming the groove (11), any mounds and/or burrs and/or bars in the vicinity of the groove are removed.

## Revendications

1. Palier lisse avec
au moins une rainure (11) formée sur la surface de glissement (1'), laquelle s'étend au moins partiellement dans la direction axiale (A) d'un arbre monté, se termine par au moins une extrémité avant le bord (12) du palier (1) et est de profondeur supérieure à 50 *µ*m et/ou de largeur supérieure à 100 µm, de manière à permettre l'incorporation de saletés et/ou de particules, et
avec en outre au moins un dépôt (2) réalisé comme trou borgne sur une surface de dépôt qui est la surface de glissement (1') et/ou une surface d'une rainure d'amenée d'huile,
le dépôt (2) étant un évidement ouvert sur la surface de dépôt, présentant une paroi de dépôt (2') et s'étendant de la surface de dépôt vers l'intérieur du palier, et
la paroi de dépôt (2') formant dans la direction d'extension un angle aigu avec une direction de référence, la direction de référence étant la tangente à la surface de dépôt au point d'intersection de la paroi de dépôt (2') avec la surface de dépôt dans la direction opposée au dépôt (2).

2. Palier lisse selon la revendication 1,
**caractérisé en ce que**
au moins une rainure (11) a une profondeur allant jusqu'à 80 µm.

3. Palier lisse selon la revendication 1 ou 2,
**caractérisé en ce que**
au moins une rainure (11) a une profondeur allant jusqu'à 150 µm.

4. Palier lisse selon l'une des revendications précédentes,
**caractérisé en ce que**
au moins une rainure (11) est oblique par rapport à la direction axiale (A) d'un arbre monté.

5. Palier lisse selon l'une des revendications précédentes,
**caractérisé en ce que**
au moins deux rainures (11) sont prévues côte à côte avec des inclinaisons différentes en direction axiale.

6. Palier lisse selon l'une des revendications précédentes,
**caractérisé en ce que**
plusieurs rainures (11) sont prévues à un emplacement défini, notamment par groupes, avec des inclinaisons différentes en direction axiale.

7. Palier lisse selon l'une des revendications précédentes,
**caractérisé en ce que**
au moins deux rainures (11) se croisent.

8. Palier lisse selon l'une des revendications précédentes,
**caractérisé en ce que**
10 à 20 rainures sont présentées.

9. Palier lisse selon l'une des revendications précédentes,
**caractérisé en ce que**
ledit palier lisse est un palier de bielle.

10. Palier lisse selon l'une des revendications 1 à 9,
**caractérisé en ce que**
ledit palier lisse présente une zone de dégagement et **en ce que** le dépôt (2) est prévu dans la zone de dégagement.

11. Palier lisse selon l'une des revendications 1 à 10,
**caractérisé en ce que**
le dépôt (2) est prévu au niveau du bord du palier dans la direction axiale.

12. Palier lisse selon l'une des revendications 1 à 11,
**caractérisé en ce que**
la contenance du dépôt (2) correspond à un multiple du volume des corps étrangers apparus avec des dimensions maximales d'environ 3 mm x 2 mm x 1 mm ou 2 mm x 2 mm x 2 mm ou un diamètre maximal d'environ 2 mm.

13. Palier lisse selon l'une des revendications 1 à 12,
**caractérisé en ce que**
une charge (3) est mise en place dans le dépôt (2), laquelle est plus tendre que le matériau du palier.

14. Palier lisse selon l'une des revendications précédentes,
**caractérisé en ce que**
il est prévu au moins une rainure de guidage des saletés (20) formée sur la surface de glissement (1'), s'étendant au moins partiellement avec une inclinaison plus forte dans la direction circonférentielle du palier lisse que dans la direction axiale (A) d'un arbre monté dans celui-ci, s'étendant jusqu'à un bord (12) du palier et ouverte sur le bord, de manière à permettre l'évacuation vers l'extérieur des particules de saleté transportées vers le bord (12) dans la rainure de guidage des saletés (20).

15. Palier lisse selon la revendication 14,
**caractérisé en ce que**
une rainure centrale (30) est en outre prévue, laquelle ne présente aucune composante axiale et communique avec au moins une des rainures de guidage des saletés (20).

16. Palier lisse selon la revendication 14 ou 15,
**caractérisé en ce que**
deux rainures de guidage des saletés (20) sont disposées en V, lesquelles s'étendent depuis un point de départ commun dans la zone centrale du palier en direction axiale dans des directions axiales opposées vers l'extérieur.

17. Palier lisse selon les revendications 15 et 16,
**caractérisé en ce que**
deux paires de rainures de guidage des saletés (20) disposées en V sont prévues, lesquelles s'étendent chacune depuis un point de départ commun dans la zone centrale du palier en direction axiale dans des directions axiales opposées vers l'extérieur, les deux points de départ étant reliés à la rainure centrale (30).

18. Procédé de fabrication d'un palier lisse selon la revendication 1, où au moins une rainure (11) est formée sur la surface de glissement (1') du palier lisse, laquelle s'étend au moins partiellement dans la direction axiale (A) d'un arbre monté, se termine par au moins une extrémité avant le bord (12) du palier et est de profondeur supérieure à 50 *µ*m et/ou de largeur supérieure à 100 *µ*m,
un dépôt (2) réalisé comme trou borgne étant en outre ménagé sur une surface de dépôt qui est la surface de glissement (1') et/ou une surface d'une rainure d'amenée d'huile,
le dépôt (2) étant un évidement ouvert sur la surface de dépôt, présentant une paroi de dépôt (2') et s'étendant de la surface de dépôt vers l'intérieur du palier, et
la paroi de dépôt (2') formant dans la direction d'extension un angle aigu avec une direction de référence, la direction de référence étant la tangente à la surface de dépôt au point d'intersection de la paroi de dépôt (2') avec la surface de dépôt dans la direction opposée au dépôt (2).

19. Procédé selon la revendication 18,
**caractérisé en ce que**
la rainure (11) est réalisée par gravure au laser, matriçage ou roulage.

20. Procédé selon la revendication 18 ou 19,
**caractérisé en ce que**
la rainure (11) est réalisée lors d'une phase d'usinage terminale ou avant des processus de revêtement consécutifs.

21. Procédé selon l'une des revendications 18 à 20,
**caractérisé en ce que**
la rainure (11) est réalisée directement dans une couche de glissement de la surface de glissement.

22. Procédé selon l'une des revendications 18 à 21,
**caractérisé en ce que**
après formation de la rainure (11), les matières enlevées et/ou ébarbures et/ou copeaux sont éliminés en totalité dans l'environnement de la rainure.
